# DEMANDE DE BREVET EUROPEEN

(11) **EP 2 364 962 A2**
(43) Date de publication de la demande: **14.09.2011**
(21) Numéro de dépôt: 11157332.5
(22) Date de dépôt: 08.03.2011
(51) Int. Cl.: C04B 28/04, C04B 38/10

(54) **Béton ultraléger et son utilisation**

(30) Priorité: 08.03.2010 FR 1051668
(71) Demandeur: CENTRE D'ETUDES ET DE RECHERCHES DE L'INDUSTRIE DU BETON, 28230 Epernon (FR)
(72) Inventeur: Jacquemot, François, 78460, CHEVREUSE (FR); Francisco, Philippe, 28700, BEVILLE LE COMTE (FR); Rougeau, Patrick, 91440, BURES SUR YVETTE (FR)
(74) Mandataire: Nevant, Marc

(57) **Abrégé**

La présente invention concerne un béton cellulaire possédant des propriétés isolantes et structurelles pour une masse volumique à l'état sec comprise entre 600 kg/m³ et 1200 kg/m³. L'invention concerne également un procédé de préparation dudit béton.

Un tel béton cellulaire peut être utilisé pour la réalisation d'éléments de construction, notamment sur les chantiers.

## Description

### Domaine technique de l'invention

La présente invention concerne un béton ultraléger, son procédé de fabrication et son utilisation, notamment pour la réalisation d'éléments de construction.

### Etat de la technique

Les enjeux du développement durable concernent aujourd'hui tous les secteurs industriels, et notamment celui de la construction qui doit faire face aux problématiques d'économies d'énergie et de réduction des émissions de gaz à effet de serre.

Les analyses de cycle de vie de bâtiments actuels montrent que la majeure partie de leur impact environnemental provient d'une part des matériaux de construction utilisés et d'autre part de l'énergie consommée pour leur chauffage qui lui-même est lié à l'efficacité de leur isolation thermique.

Il est donc aujourd'hui important de pouvoir disposer d'éléments ou parties d'ouvrages structurels pour la construction dont le matériau constitutif présente un faible impact sur l'environnement et qui participe à l'isolation thermique dans un bâtiment du fait de sa faible conductivité thermique.

Les bétons légers présentent une faible conductivité thermique. Leur utilisation est courante depuis plusieurs dizaines d'années. Un béton léger se caractérise couramment par une masse volumique inférieure ou égale à 2000 kg/m³ mesurée après séchage en étuve. Les bétons légers sont généralement obtenus, soit grâce à l'emploi de granulats légers, soit grâce à une structure cellulaire, soit une combinaison des deux.

Les bétons cellulaires sont de deux types : le béton cellulaire autoclavé et le béton cellulaire durci à pression atmosphérique dit béton mousse.

Les premières recherches sur le béton mousse remontent aux années 1920. L'état de l'art sur le béton mousse est assez bien synthétisé dans la littérature (K. Ramamurthy, E.K. Kunhanandan Nambiar, G. Indu Siva Ranjani, A classification of studies on properties of foam concrete, Cement & Concrete Composites 31 (2009) 388-396 ; R.K. Dhir, M.D. Newlands, A. McCarthy, Use of foam concrete in construction, Thomas Telford ed., 2005). Le béton mousse est un matériau solide dans lequel des bulles d'air (qui représentent au moins 20% du volume), sont emprisonnées dans une matrice liante. La structure cellulaire de ce matériau peut être obtenue via l'incorporation d'air soit à partir d'une mousse fabriquée séparément puis introduite lors du malaxage avec les autres constituants, soit par l'utilisation d'un adjuvant spécifique, un agent moussant, introduit dans le mélange au moment du malaxage avec les autres constituants.

La tension de surface des bulles d'air est un élément décisif pour assurer la stabilité d'une mousse telle qu'un béton mousse à l'état frais (R. J. Pugh, Foaming, foam films, antifoaming and defoaming, Advances in Colloid and Interface Science, Volume 64, 8 February 1996, Pages 67-142).

Les applications du béton mousse en construction sont multiples (remplissage, isolation thermique et acoustique, ...) mais ses résistances mécaniques étant faibles comparées à celles du béton traditionnel, le béton mousse est généralement destiné à un usage non structurel.

Certains travaux récents montrent qu'il est possible de réaliser un béton mousse dont les résistances mécaniques sont suffisantes pour envisager une application structurelle (Z. Pan, H. Fujiwara, T. Wee, Préparation of High Performance Foamed Concrete from Cement, Sand and Mineral Admixtures, Journal of Wuhan University of Technology - Materials Science Edition, Volume 22, Number 2 / juin 2007, Pages 295-298). Cependant, cette solution nécessite de réaliser au préalable, à l'aide d'équipements spécifiques, une mousse qu'on introduit ensuite dans le malaxeur avec un coulis de rapport Eau/Liant inférieur à 0,3 et constitué de ciment, de laitier de haut fourneau, de cendres volantes, d'eau et de superplastifiant. D'autre part, la masse volumique de ce béton mousse reste supérieure à 1000 kg/m³.

### Description de l'invention

Il a maintenant été découvert, et c'est le fondement de l'invention, qu'il est possible d'obtenir un béton cellulaire à la fois très léger (c'est-à-dire ayant une masse volumique comprise entre environ 600 et environ 1200 kg/m³), isolant, structurel et réalisable sans préparation préalable d'une mousse. Ce béton cellulaire présente un faible impact environnemental, du fait des constituants utilisés et de leurs proportions. Le matériau obtenu permet la réalisation d'éléments de construction moulables préfabriqués en usine et de parties d'ouvrages réalisées sur chantier en respectant le « cahier des charges » indiqué ci-dessus.

Ainsi, selon un premier aspect, l'invention concerne un béton cellulaire composé d'un liant hydraulique, d'eau, d'un fluidifiant, d'un agent moussant, et éventuellement d'un ou plusieurs additifs choisis parmi les granulats légers, les fillers, les fibres et les adjuvants pour béton (autres que fluidifiant et agent moussant). Les proportions des différents constituants du béton cellulaire sont les suivantes :
- la proportion massique d'eau efficace, relativement au liant hydraulique, est comprise entre environ 15% et environ 30%, préférentiellement entre environ 15% et environ 21% ;
- la proportion massique de fluidifiant, relativement au liant hydraulique, est comprise entre environ 0,1% et environ 2,5% en extrait sec, préférentiellement entre environ 0,5% et environ 1% en extrait sec ;
- la proportion massique d'agent moussant, relativement au liant hydraulique, est comprise entre environ 0,03% et environ 0,5% en extrait sec, préférentiellement entre environ 0,1% et environ 0,3% en extrait sec.

L'eau efficace représente l'eau participant à l'hydratation du béton. Elle correspond à la somme de l'eau ajoutée au moment du malaxage et de l'eau éventuellement apportée par les adjuvants, diminuée de la quantité d'eau absorbée le cas échéant par les granulats. Le coefficient d'absorption d'eau des granulats est mesuré selon la norme NF EN 1097-6.

Le liant hydraulique utilisé dans le cadre de la présente invention est un matériau minéral finement broyé comprenant un ciment et une ou plusieurs additions minérales et qui, mélangé à de l'eau, durcit par suite de réactions et de processus d'hydratation. Le liant hydraulique se présente avantageusement sous forme pulvérulente de granulométrie telle qu'au moins 90% des particules passent au tamis de 200 µm (D₉₀ < 200 µm).

Le ciment peut être à base de clinker Portland tel que ceux définis dans la norme EN 197-1, un ciment d'aluminate de calcium tel que ceux définis dans la norme EN 14647, un ciment à base de sulfo-aluminate de calcium tel que le ciment sulfo-alumineux ou de sulfate de calcium tel que le plâtre, tout autre ciment aux propriétés hydrauliques ou tout mélange des constituants précités.

Les additions minérales peuvent être des laitiers granulés moulus de haut fourneau tels que ceux définis dans la norme EN 15167-1, des cendres volantes pour béton telles que celles définies dans la norme EN 450-1, des fumées de silice pour béton telles que celles définies dans la norme EN 13263-1, des métakaolins pour béton tels que ceux définis dans le projet de norme NF P 18-513, des additions calcaires telles que celles définies dans la norme NF P 18-508, des additions siliceuses telles que celles définies dans la norme NF P 18-509, tout autre composé minéral finement divisé possédant des propriétés liantes dans le béton de l'invention, ou tout mélange des constituants précités.

Le rapport massique des additions minérales au ciment est avantageusement compris entre environ 1/1 et environ 4/1, de préférence entre environ 1/1 et environ 3/1.

Le fluidifiant utilisé dans le cadre de la présente invention est constitué d'un ou plusieurs composés organiques permettant d'augmenter l'étalement et l'affaissement du béton, tels que les plastifiants ou superplastifiants pouvant être définis dans la norme EN 934-2. Les superplastifiants peuvent notamment être de la famille des polycarboxylates, des polynaphtalène sulfonates, des mélamine sulfonates ou des lignosulfonates. A titre d'exemples de superplastifiant, on peut citer ceux commercialisés sous la dénomination GLENIUM®, la dénomination CHRYSOFLUID®, la dénomination VISCOCRETE® ou encore la dénomination MAPEFLUID®.

L'agent moussant (également appelé agent d'expansion) utilisé dans le cadre de la présente invention permet, lors de la fabrication du béton, de créer des cellules remplies d'air (d'où le nom de béton « cellulaire »). La mousse est formée au cours du malaxage du béton et ne nécessite pas d'être préparée au préalable séparément du béton. L'agent moussant est typiquement à base d'un ou plusieurs tensio-actifs d'origine naturelle ou organique, possédant une longue chaine carbonée, tels que les sulfonates de formule RSO₃⁻X⁺, où R est une chaine carbonée (de type alcane ou alcène) et X⁺ est une espèce cationique. L'agent moussant peut être sous forme pulvérulente ou liquide. A titre d'exemples d'agent moussant, on peut citer ceux commercialisés sous la dénomination RHEOCELL®, la dénomination SIKA® ou encore la dénomination ISOCEM®.

Lorsqu'ils sont présents dans la composition du béton cellulaire selon l'invention, les additifs sont utilisés dans les proportions suivantes :
- la proportion massique de fillers, relativement au liant hydraulique, est au plus égale à environ 400%, et est préférentiellement comprise entre environ 50% et environ 150% ;
- la proportion massique de granulats légers, relativement au liant hydraulique, est au plus égale à environ 300%, et est préférentiellement comprise entre environ 50% et environ 100% ;
- la proportion massique de fibres, relativement au liant hydraulique, est au plus égale à environ 5%, et est préférentiellement comprise entre environ 1% et environ 2% ;
- la proportion massique d'adjuvant(s) pour béton, relativement au liant hydraulique, est au plus égale à environ 5% en extrait sec, et est préférentiellement comprise entre environ 0,5% et environ 1,5% en extrait sec.

Les fillers (également appelés fines) utilisés dans le cadre de la présente invention sont des granulats tels que ceux définis dans la norme EN 12620. Les fillers se présentent sous forme pulvérulente de granulométrie telle que le diamètre du plus gros granulat est inférieur à 2 mm et D₈₅ < 125 µm et D₇₀ < 63 µm.

Les granulats légers utilisés dans le cadre de la présente invention sont des matériaux granulaires naturels, artificiels ou recyclés d'origine minérale, tels que ceux définis dans la norme NF EN 13055-1. Les granulats légers sont de préférence des sables dont le diamètre du plus gros granulat est inférieur à 4 mm.

Les fibres utilisées dans le cadre de la présente invention sont des fibres d'acier ou des fibres polymère telles que celles définies dans les normes NF EN 14889-1 et NF EN 14889-2.

Les adjuvants, autres que le fluidifiant et l'agent moussant, utilisés dans le cadre de la présente invention peuvent être des accélérateurs de durcissement, des accélérateurs de prise, des retardateurs de prise, des agents de viscosité ou tout autre adjuvant couramment utilisé dans la préparation des bétons cellulaires. Ces adjuvants peuvent se présenter sous la forme solide ou liquide.

Le béton cellulaire conforme à l'invention peut être obtenu selon des techniques couramment utilisées dans l'industrie du béton. Il s'avère toutefois que l'étape d'addition de l'agent moussant est importante pour l'obtention dudit béton cellulaire.

Ainsi, selon un second aspect, invention concerne un procédé de préparation du béton cellulaire tel que défini précédemment, procédé qui comprend les étapes suivantes :
- a) le malaxage du liant hydraulique (ciment et addition(s) minérale(s)) et des additifs secs éventuels (fillers, granulats légers, fibres) ;
- b) l'ajout d'eau, du fluidifiant et des adjuvants éventuels autres que l'agent moussant au mélange ainsi obtenu, et le malaxage du tout jusqu'à l'obtention d'une pâte de viscosité comprise entre environ 300 mPa.s et environ 3000 mPa.s, préférentiellement entre environ 500 mPa.s et environ 1500 mPa.s, lorsque mesurée au viscosimètre Brookfield® DV-II + avec l'aiguille n°3 à 10 tour/min ;
- c) l'ajout de l'agent moussant au mélange ainsi obtenu, et le malaxage du tout.

L'ajout d'eau et de fluidifiant à l'étape b) est tel que la proportion massique d'eau efficace, relativement au liant hydraulique, soit comprise entre environ 15% et environ 30%, de préférence entre environ 15% et environ 21%, et la proportion massique de fluidifiant, relativement au liant hydraulique, soit comprise entre environ 0,1% et environ 2,5% en extrait sec, de préférence entre environ 0,5% et environ 1% en extrait sec. L'ajout d'agent moussant à l'étape c) est tel que la proportion massique d'agent moussant, relativement au liant hydraulique, soit comprise entre environ 0,03% et environ 0,5% en extrait sec, de préférence entre environ 0,1% et environ 0,3% en extrait sec. Il est possible, lors de l'étape b), d'ajouter les différents constituants en une ou plusieurs fois. Selon une variante du procédé décrit ci-dessus, une partie de l'agent moussant peut être introduite à l'étape b), et le reste à l'étape c). Le fluidifiant, l'agent moussant et les autres adjuvants éventuels, notamment l'accélérateur de durcissement, peuvent être ajoutés sous forme liquide ou solide. On notera que le fluidifiant peut participer, en raison de ses effets secondaires, aux propriétés moussantes, et que l'agent moussant peut participer aux propriétés fluidifiantes.

Les différentes étapes a) à c) sont avantageusement mises en oeuvre dans un malaxeur du type malaxeur à béton ou bétonnière de chantier. Il est important qu'à chaque étape, le malaxage soit effectué de manière énergique afin d'obtenir un mélange homogène des différents constituants du béton. En particulier, lors de la dernière étape, le malaxage doit permette d'entraîner l'air dans la matrice cimentaire jusqu'à l'obtention du béton de masse volumique désirée. Pour ce faire, l'homme du métier adaptera la vitesse de malaxage en fonction du type de malaxeur utilisé et du volume à malaxer.

Le béton cellulaire obtenu est autoplaçant à l'état frais, et peut être coulé sans vibration et dans les 20 minutes qui suivent la fin du malaxage dans un moule à la forme voulue avant de commencer à durcir à froid spontanément. De manière avantageuse, le béton cellulaire durcit à pression atmosphérique pendant une durée suffisante pour permettre son démoulage. Le durcissement peut être le cas échéant accéléré en utilisant des accélérateurs et/ou un traitement thermique adapté tel que ceux caractérisés par une phase de montée en température n'excédant pas 20°C/h, un palier à une température n'excédant pas 65°C et une phase de refroidissement jusqu'à température ambiante. Aucun autoclavage n'est requis pour le durcissement du béton cellulaire selon invention, qui est donc du type béton mousse. Ceci présente un avantage indéniable par rapport aux bétons autoclavés, qui ne sont normalement pas (ou difficilement) moulables.

Dans tous les cas le matériau est protégé de la dessiccation au jeune âge.

Le béton cellulaire durci est léger et homogène. Il comprend une quantité d'air occlus à l'état sec comprise entre environ 40% et environ 75% de son volume, de préférence entre environ 50% et environ 70% de son volume. Il présente les propriétés suivantes :
- une masse volumique (à l'état sec) comprise entre environ 600 kg/m³ et environ 1200 kg/m³ (lorsque mesurée d'après la norme NF EN 12390-7) ;
- une conductivité thermique comprise entre environ 0,1 W/K.m et environ 0,5 W/K.m, de préférence entre 0,2 W/K.m et environ 0,5 W/K.m (lorsque mesurée d'après la norme NF EN 12664) ;
- une résistance mécanique à la compression à 28 jours comprise entre environ 3 et environ 50 MPa (lorsque mesurée d'après la norme NF EN 196-1 avec une vitesse de montée en charge telle que la rupture est obtenue en environ une minute).

Les valeurs de masse volumique (à l'état sec) obtenues pour le béton cellulaire de l'invention permettent de le classer dans la catégorie des bétons dits ultralégers.

Sans vouloir être lié par une quelconque théorie, les propriétés physiques et mécaniques du béton cellulaire de invention s'expliquent notamment par leur faible ratio eau efficace/liant hydraulique et la forte compacité granulaire de la matrice cimentaire constituant l'interface entre les bulles d'air, ainsi que par les conditions dans lesquelles l'agent moussant est introduit.

Le béton cellulaire selon l'invention a un impact environnemental réduit grâce à l'incorporation dans le liant hydraulique d'additions minérales qui viennent se substituer en partie au ciment (lequel représente au plus environ 50% en masse de la composition du béton).

Du fait de ses propriétés structurelles et isolantes, le béton cellulaire selon invention peut être avantageusement utilisé comme matériau de construction, pour la réalisation d'éléments de construction (durcis), tels que des éléments moulables et des parties d'ouvrage. Ces éléments moulables (préfabriqués en usine) et ces parties d'ouvrage (réalisables sur chantier) permettent d'améliorer l'isolation thermique et acoustique des bâtiments.

Les éléments préfabriqués en usine et les parties d'ouvrage réalisées sur chantier s'assemblent sur le chantier avec simplicité du fait de leur légèreté et de leur facilité à être découpés et ajustés si nécessaire ; de plus, ils sont durables et recyclables en fin de vie du bâtiment.

Ainsi, selon un autre aspect, l'invention concerne un élément de construction réalisé à partir du béton cellulaire décrit ci-dessus. A titre d'éléments susceptibles d'être fabriqués avec ledit béton, on peut citer notamment des produits modulaires de type blocs (avec ou sans alvéoles) ou bien des produits de plus grandes dimensions (comme des éléments de mur par exemple).

Les éléments de construction sont tout particulièrement adaptés à la construction d'ouvrages nécessitant une bonne isolation acoustique et/ou une bonne résistance au feu.

Le béton cellulaire selon l'invention peut également être utilisé sur un chantier pour la réalisation de chainage ou de rupteur thermique par exemple. Le béton cellulaire peut aussi être utilisé en association avec d'autres matériaux ou bétons, en technique bicouche ou technique « sandwich » par exemple.

L'invention est illustrée par les exemples non limitatifs suivants.

### Exemples 1-3 : préparation de béton cellulaire

On a préparé trois formules de béton cellulaire dans un malaxeur à mortier tel que décrit dans la norme NF EN 196-1 selon le protocole suivant :
- les constituants pulvérulents sont malaxés à sec pendant 1 minute à petite vitesse ;
- l'eau mélangée au superplastifiant et à l'accélérateur de durcissement est ensuite introduite dans le malaxeur. L'ensemble est malaxé énergiquement (grande vitesse) pendant une durée de 5 minutes, jusqu'à l'obtention d'une pate de viscosité comprise entre environ 500 mPa.s et environ 1500 mPa.s lorsque mesurée au viscosimètre Brookfield® DV-II + avec l'aiguille n°3 à 10 tours/min ;
- l'agent moussant est alors introduit. L'ensemble est à nouveau malaxé, pendant une durée de 10 minutes à grande vitesse.

Les compositions des trois formules sont indiquées dans le tableau 1.

**Tableau 1**

| | Ex 1 | Ex2 | Ex 3 |
|---|---|---|---|
| Dosage (kg/m³) | | | |
| Ciment CEM I 52,5 R - Usine de Saint Pierre La Cour - Lafarge | 134 | 332 | 465 |
| Laitier de haut fourneau - Usine de Moerdijk - Orcem | 134 | - | - |
| Addition siliceuse - Millisil® C400 - Sifraco | 268 | 369 | - |
| Addition calcaire - Hydrocarb® OG - Omya | - | 37 | 233 |
| Addition calcaire - Betocarb® P2 B EN - Omya | - | - | 233 |
| Superplastifiant Glenium® ACE 456 - BASF | 17,7 | 18,5 | 15,5 |
| Agent moussant Sika® SB2 - Sika | 5,4 | 7,4 | 3,9 |
| Accélérateur Durcissement Chryso® Xel 650 - Chryso | 5,4 | 7,4 | 9,3 |
| Eau d'ajout | 96,8 | 135 | 132,6 |

### Exemple 4 : propriétés mécaniques des bétons cellulaires

On a mesuré la masse volumique du béton frais obtenu selon le mode opératoire des exemples 1-3. Le béton frais a ensuite été coulé dans des moules tels que ceux définis dans la norme NF EN 196-1. Les éprouvettes de dimensions 4x4x16 cm ont été protégées de la dessiccation et ont été démoulées 24 heures après le malaxage. Elles ont été par la suite conservées dans une atmosphère d'hygrométrie relative supérieure à 95 %.

Des essais de compression jusqu'à rupture, mesurée d'après la norme NF EN 196-1, ont été effectués 7 jours et 28 jours après le malaxage avec une vitesse de montée en charge telle que la rupture est obtenue en environ une minute.

La masse volumique à l'état sec a été déterminée via la mesure de la masse et des dimensions d'éprouvettes séchées en étuve à 45°C jusqu'à masse constante. Le début du séchage jusqu'à masse constante a lieu 28 jours après le malaxage.

Les propriétés des bétons cellulaires selon les exemples 1-3 sont indiquées dans le tableau 2.

**Tableau 2**

| | Ex 1 | Ex 2 | Ex 3 |
|---|---|---|---|
| Caractéristiques | | | |
| Masse volumique à l'état frais (kg/m³) | 662 | 907 | 1092 |
| Masse volumique à l'état sec (kg/m³) | 602 | 844 | 1074 |
| Proportion volumique d'air occlus | 69% | 58% | 52% |
| Résistance en compression à 7 jours (MPa) | 2,4 | 10,8 | 15,6 |
| Résistance en compression à 28 jours (MPa) | 5,9 | 11,1 | 21,2 |

## Revendications

1. Béton cellulaire composé d'un liant hydraulique, d'eau, d'un fluidifiant et d'un agent moussant, dans lequel :
- la proportion massique d'eau efficace, relativement au liant hydraulique, est comprise entre environ 15% et environ 30% ;
- la proportion massique de fluidifiant, relativement au liant hydraulique, est comprise entre environ 0,1% et environ 2,5% en extrait sec ;
- la proportion massique d'agent moussant, relativement au liant hydraulique, est comprise entre environ 0,03% et environ 0,5% en extrait sec ;
ledit béton cellulaire comprenant une quantité d'air occlus à l'état sec et durci comprise entre environ 40% et environ 75% de son volume, et possédant une masse volumique à l'état sec et durci comprise entre environ 600 kg/m³ et environ 1200 kg/m³.

2. Béton cellulaire selon la revendication 1, dans lequel le liant hydraulique comprend un ciment et une ou plusieurs additions minérales choisies parmi les laitiers granulés moulus de haut fourneau, les cendres volantes pour béton, les fumées de silice pour béton, les métakaolins pour béton, les additions calcaires et les additions siliceuses.

3. Béton cellulaire selon la revendication 2, dans lequel le rapport massique des additions minérales au ciment est compris entre environ 1/1 et environ 4/1, de préférence entre environ 1/1 et environ 3/1.

4. Béton cellulaire selon l'une des revendications 1 à 3, dans le lequel le liant hydraulique possède une granulométrie D₉₀ < 200 µm.

5. Béton cellulaire selon l'une des revendications 1 à 4, qui est également composé d'un ou plusieurs additifs choisis parmi les fillers, les granulats légers, les fibres et les adjuvants pour béton, dans les proportions suivantes :
- la proportion massique de fillers, relativement au liant hydraulique, est au plus égale à 400% ;
- la proportion massique de granulats légers, relativement au liant hydraulique, est au plus égale à 300% ;
- la proportion massique de fibres, relativement au liant hydraulique, est au plus égale à 5% ;
- la proportion massique d'adjuvants, relativement au liant hydraulique, est au plus égale à 5% en extrait sec.

6. Béton cellulaire selon l'une des revendications 1 à 5, qui comprend une quantité d'air occlus à l'état sec et durci comprise entre environ 50% et environ 70% de son volume.

7. Béton cellulaire selon l'une des revendications 1 à 6, qui possède à l'état durci une conductivité thermique, mesurée selon la norme NF EN 12664, comprise entre environ 0,1 W/K.m et environ 0,5 W/K.m.

8. Béton cellulaire selon l'une des revendications 1 à 7, qui possède à l'état durci une résistance mécanique à la compression à 28 jours comprise entre environ 3 MPa et environ 50 MPa.

9. Procédé de préparation du béton cellulaire tel que défini à l'une des revendications 1 à 8, qui comprend les étapes suivantes :
- a) le malaxage du liant hydraulique et des additifs secs éventuels ;
- b) l'ajout au mélange ainsi obtenu d'eau tel que la proportion massique d'eau efficace, relativement au liant hydraulique, soit comprise entre environ 15% et environ 30%, du fluidifiant tel que la proportion massique de fluidifiant, relativement au liant hydraulique, soit comprise entre environ 0,1% et environ 2,5% en extrait sec, et des adjuvants éventuels autres que l'agent moussant, et le malaxage du tout jusqu'à l'obtention d'une pâte de viscosité comprise entre environ 300 mPa.s et environ 3000 mPa.s lorsque mesurée au viscosimètre Brookfield® DV-II + avec l'aiguille n°3 à 10 tour/min ;
- c) l'ajout au mélange ainsi obtenu de l'agent moussant tel que la proportion massique d'agent moussant, relativement au liant hydraulique, soit comprise entre environ 0,03% et environ 0,5% en extrait sec, et le malaxage du tout.

10. Procédé selon la revendication 9, qui comprend en outre :
- d) le durcissement du mélange obtenu à l'étape c) à pression atmosphérique.

11. Utilisation du béton cellulaire selon l'une des revendications 1 à 8 comme matériau de construction.

12. Elément de construction obtenu à partir du béton cellulaire tel que défini dans l'une des revendications 1 à 8.

13. Elément de construction selon la revendication 12, qui est un bloc avec ou sans alvéoles.
